# EUROPÄISCHE PATENTANMELDUNG

(11) **EP 3 644 391 A2**
(43) Veröffentlichungstag der Anmeldung: **29.04.2020**
(21) Anmeldenummer: 19203515.2
(22) Anmeldetag: 16.10.2019
(51) Int. Cl.: H01M 2/06, H02G 15/013, A62C 2/06

(54) **KABELDURCHFÜHRUNG FÜR EIN BATTERIEGEHÄUSE**

(30) Priorität: 25.10.2018 DE 102018126614
(71) Anmelder: Tegimus Holding GmbH, 68169 Mannheim (DE)
(72) Erfinder: Baum, Armin, 64668 Rimbach (DE); Cappellucci, Peter, 68199 Mannheim (DE)
(74) Vertreter: Wesch, Arno

(57) **Zusammenfassung**

Eine Kabeldurchführung (1, 1', 1") eines Batteriegehäuses (2) oder für ein Batteriegehäuse (2), umfassend einen Dichtkörper (3, 3', 3"), der einen Durchgang (4) für ein Kabel (5) oder eine Leitung aufweist, ist im Hinblick auf die Aufgabe, eine Kabeldurchführung für ein Batteriegehäuse anzugeben, welche es bei kompaktem Aufbau erlaubt, eine Kammer im Brandfall vor eindringenden Flammen zu schützen, dadurch gekennzeichnet, dass der Dichtkörper (3, 3', 3") ein intumeszierendes Material aufweist oder aus einem solchen Material gefertigt ist.

## Beschreibung

Die Erfindung betrifft eine Kabeldurchführung nach dem Oberbegriff des Patentanspruchs 1.

Im Zuge der Elektrifizierung von Fahrzeugen sowohl für das Land, für das Wasser oder für Schienen, werden zunehmend Batterien eingesetzt, um die Fahrzeuge elektrisch zu betreiben. Die Batterien werden in möglichst wärmeresistenten oder feuerresistenten Batteriegehäusen aufgenommen, um diese beispielsweise im Fall eines von außen auf das Batteriegehäuse einwirkenden Feuers oder von außen einwirkender Wärme vor einer Entzündung und/ oder thermischen Belastung zu schützen. Es soll auch eine Brandausbreitung von innen nach außen, beispielsweise aufgrund einer Entzündung von Batteriezellen, verhindert oder zumindest zeitlich verzögert werden.

Innerhalb eines Batteriegehäuses sind Zellen zu Zellblöcken zusammengefasst, die in Kammern des Batteriegehäuses angeordnet sind. Die Kammern sind durch Kammerwände voneinander abgetrennt. Durch eine Kammerwand kann eine Kabeldurchführung greifen, um Kabel von einer Kammer in eine andere zu führen. Vor diesem Hintergrund ist aus der WO 2017/207 125 A1 bekannt, in einem Querträgerelement eines Batteriegehäuses eine Ausnehmung für eine Kabeldurchführung auszubilden. Im Brandfall besteht das Bedürfnis, einer Kettenreaktion entgegenzuwirken, die alle Zellblöcke nacheinander schädigt oder in Brand setzt. Durch eine Ausnehmung für eine Kabeldurchführung kann Feuer von einer Kammer in eine andere gelangen.

Der Erfindung liegt vor diesem Hintergrund die Aufgabe zugrunde, eine Kabeldurchführung für ein Batteriegehäuse anzugeben, welche es bei kompaktem Aufbau erlaubt, eine Kammer im Brandfall vor eindringenden Flammen zu schützen.

Die vorliegende Erfindung löst die genannte Aufgabe durch die Merkmale des Patentanspruchs 1.

Erfindungsgemäß ist zunächst erkannt worden, dass im Brandfall eine Ausnehmung oder Aussparung einer Kammerwand oder Außenwand, durch die im Normalbetrieb ein Kabel oder eine Leitung verläuft, verschlossen werden muss, damit Feuer nicht von einer Kammer in eine andere übergreifen kann. Darauf ist erkannt worden, dass bekannte Kabeldurchführungen bei höheren Temperaturen einen wirksamen und zeitlich länger anhaltenden Brandschutz nicht gewährleisten können. Schließlich ist erkannt worden, dass ein Dichtkörper vorgesehen werden kann, der ein intumeszierendes Material aufweist oder aus einem solchen Material gefertigt ist. Ein intumeszierendes Material lässt sich leicht verarbeiten und entfaltet im Brandfall eine Volumenvergrößerung. So kann eine Aussparung oder eine Ausnehmung in einer Kammerwand oder Außendwand verschlossen werden.

Intumeszierendes Material zeigt ein besonders gutes Expansionsverhalten. Intumeszierendes Material reagiert unter Wärmeeinwirkung und/ oder Feuereinwirkung und ist daher thermisch aktivierbar. Es reagiert, indem es um ein Mehrfaches seiner ursprünglichen Dicke aufquillt. Hierbei baut das Material eine isolierende Schutzlage durch Verkohlung auf. Die Struktur, auf der es aufliegt, wird gegen Wärme- und/ oder Feuereinwirkung geschützt.

Eine Intumeszenz wird üblicherweise durch mindestens drei Komponenten erreicht. Die erste Komponente ist eine Kohlenstoffquelle, wie beispielsweise Pentaerythrit oder Dipentaerythrit. Die zweite Komponente ist ein Treibmittel, wie beispielsweise Melamin und festes Chlorparaffin. Die dritte Komponente ist ein Mineralsäure-Katalysator, wie beispielsweise Ammoniumpolyphosphat.

Sobald ein intumeszierendes Material erwärmt oder erhitzt wird, laufen mehrere chemische Reaktionen ab. Ammoniumpolyphosphat zerfällt und erzeugt Phosphorsäure. Phosphorsäure bewirkt eine Dehydratisierung von Pentaerythrit oder Dipentaerythrit und erzeugt eine kohlenstoffhaltige Lage. Das Treibmittel zerfällt unter Freisetzung von nicht brennbaren Gasen. Die Gase führen zur Aufschäumung der kohlenstoffhaltigen Lage. Hierdurch wird eine Schaumstruktur gebildet, die als Wärmeisolator hochwirksam ist.

Als intumeszierende Materialien, die beispielsweise ab ca. 200 bis 250 °C reagieren, indem sie um ein Mehrfaches ihrer ursprünglichen Schichtdicke aufquellen, seien Blähgraphit und Vermikulit genannt.

Das intumeszierende Material könnte als Schicht mit dem Dichtkörper verbunden sein oder der Dichtkörper könnte mit dem intumeszierenden Material getränkt sein. Eine Schicht kann an besonders geeigneten Stellen des Dichtkörpers angebracht werden. Der Dichtkörper könnte außerdem eine Gummiummantelung oder eine Kunststoffummantelung aufweisen.

Der Dichtkörper könnte als Formteil ausgebildet sein, welches eine Trägerstruktur mit Maschen oder Poren aufweist, wobei das intumeszierende Material in die Trägerstruktur eingebettet ist. Vorteilhaft halten die Maschen oder Poren ein flüssiges intumeszierendes Material aufgrund einer Kapillarwirkung in sich zurück, so dass eine nahezu willkürlich geometrisch ausgeformte Trägerstruktur problemlos mit intumeszierendem Material imprägniert werden kann. Vor diesem Hintergrund ist denkbar, als intumeszierendes Material eine Intumeszenzfarbe zu verwenden. Das Formteil kann isoliert in eine Kammerwand eingesetzt werden und nur ein Kabel oder eine Leitung aufnehmen.

Vor diesem Hintergrund könnte die Trägerstruktur aus einem Metall oder einem hochtemperaturbeständigen Material gefertigt sein. Diese Materialien behalten im Brandfall im Wesentlichen ihre Form bei. Konkret ist denkbar, die Trägerstruktur als Drahtgewebe, Drahtgestrick oder als metallisches Drahtgewebe oder als metallisches Drahtgestrick auszubilden. Die Trägerstruktur kann auch aus einem anderen hochtemperaturbeständigen Material gefertigt sein.

Der Dichtkörper könnte als Block oder als Block mit mindestens einer Nut zur Aufnahme einer Kammerwand oder Außenwand ausgebildet sein. Durch diese Ausgestaltung kann der Block in eine größere Aussparung von einer Seite her eingeschoben werden, wobei die Nut den Block führt und formschlüssig hält, wenn dieser auf eine Kammerwand oder Außenwand aufgeschoben wird.

Der Dichtkörper könnte in einem Gehäuse oder Gehäuseteil aufgenommen sein, welches einen weiteren Durchgang für ein Kabel oder eine Leitung aufweist. Hierdurch wird der Dichtkörper stabilisiert und kann im Brandfall das Gehäuse zumindest teilweise sehr gut ausfüllen und verschließen. Die Wandungen des Gehäuses zwingen den sich ausdehnenden Dichtkörper in Richtung des Kabels oder der Leitung, die durch das Gehäuse und die Kammerwandung läuft.

Der Dichtkörper könnte von dem Gehäuseteil umgeben und durch dieses an ein Gehäusegegenteil anlegbar sein. So kann der Dichtkörper als Einzelteil in eine Gehäusestruktur eingefügt werden.

Vor diesem Hintergrund könnte das Gehäuseteil mit dem Gehäusegegenteil verbindbar oder verschraubbar sein. So kann der Dichtkörper verliersicher im Gehäuseteil aufgenommen werden.

Das Gehäusegegenteil könnte mit einem weiteren Gehäuseteil verbindbar und/ oder verschraubbar sein, welches dem Gehäuseteil axial gegenüberliegt. Das Gehäuseteil kann auf einer Seite einer Kammerwand oder Außenwand angeordnet sein und das weitere Gehäuseteil auf der gegenüberliegenden Seite. Hierdurch kann das Gehäusegegenteil die Kammerwand oder Außenwand durchgreifen und an dieser fixiert werden.

Das Gehäusegegenteil könnte eine Dichtung tragen und/ oder einen Klemmkörper aufnehmen, der von einem weiteren Gehäuseteil in das Gehäusegegenteil einpressbar ist. Die Dichtung erlaubt eine dichtende Anlage des Gehäusegegenteils an einer Kammerwand oder Außendwand. Der Klemmkörper fixiert ein Kabel oder eine Leitung, welche das Gehäusegegenteil durchläuft.

Der Dichtkörper könnte zur Abdichtung von innen nach außen vorgesehen sein, wobei von außen nach innen eine IP-Dichtung vorgesehen ist. Eine IP-Dichtung soll die Schutzklasse IP67 erfüllen und gegen Staub und Wasser während zumindest eines gewissen Zeitraums abdichten. Die IP-Dichtung kann aus einem Elastomer gefertigt sein. Im Brandfall kann die IP-Dichtung schaden nehmen und der Dichtkörper kann dann einen Durchbruch in einer Kammerwand oder Außenwand verschließen.

Ein Batteriegehäuse könnte eine Kabeldurchführung der hier beschriebenen Art aufweisen. So können einzelne Kammern des Batteriegehäuses im Brandfall vor einem Übergreifen des Feuers von einer Kammer in eine andere geschützt werden.

Vor diesem Hintergrund könnte der Dichtkörper als Formteil in einer Kammerwand und/ oder Außenwand des Batteriegehäuses angeordnet sein, wobei sich ein Kabel oder eine Leitung sowohl durch den Dichtkörper als auch durch die Außenwand und/ oder die Kammerwand von einer ersten Kammer kommend in eine zweite Kammer erstreckt. Wenn das Kabel, die Kabelummantelung oder die Leitung verbrennt oder sich zersetzt, entstehen gefährliche Lücken, die durch das intumeszierende Material des Dichtkörpers verschlossen werden können.

Der Dichtkörper könnte in eine Aussparung der Kammerwand oder Außenwand eingeschoben oder in eine Ausnehmung der Kammerwand oder Außenwand eingesteckt sein. Der Dichtkörper kann als Einzelteil ohne weitere Dichtelemente eingesetzt werden. So kann ein platzsparender Brandschutz realisiert werden.

Der Dichtkörper könnte unmittelbar an der Kammerwand oder Außenwand des Batteriegehäuses anliegen. Hierdurch werden Kosten für weitere Dichtelemente eingespart.

Der Dichtkörper könnte in einem Gehäuseteil aufgenommen sein und zwischen diesem und einem Gehäusegegenteil aufgenommen sein, wobei das Gehäusegegenteil eine Kammerwand oder Außenwand des Batteriegehäuses durchgreift und wobei dem Gehäuseteil ein weiteres Gehäuseteil axial auf einer anderen Seite der Kammerwand oder Außenwand gegenüberliegt und mit dem Gehäusegegenteil verbunden ist. So wird das Gehäusegegenteil in der Kammerwand oder Außenwand fixiert und der Dichtkörper verliersicher positioniert.

Eine Dichtung könnte auf dem Gehäusegegenteil aufliegen und dieses umfangen, wobei das weitere Gehäuseteil einen Klemmkörper in das Gehäusegegenteil eindrückt. Durch die Dichtung erfolgt eine äußere Abdichtung gegen die Kammerwand oder Außenwand, durch den Klemmkörper erfolgt eine Fixierung des Kabels oder der Leitung. Die Dichtung ist bevorzugt als IP-Dichtung ausgestaltet, könnte aber auch ebenfalls ein intumeszierendes Material aufweisen.

Das Batteriegehäuse könnte mindestens ein Ventil zum Druckausgleich und/ oder Drucküberlastabbau aufweisen, welches ein intumeszierendes Material zum Verschließen einer Fluidleitung aufweist.

Das hier beschriebene Batteriegehäuse wird bevorzugt in einem Fahrzeug, insbesondere einem Kraftfahrzeug oder Automobil, verwendet. Das Batteriegehäuse ist bevorzugt aus einem Metall gefertigt, insbesondere die Kammerwände sind aus einem Metall gefertigt.

In der Zeichnung zeigen
- Fig. 1: eine perspektivische Ansicht eines Batteriegehäuses, mit mehreren Kammern, wobei im Deckel Ventile zum Druckausgleich und/ oder Drucküberlastabbau angeordnet sind und wobei die Kammern durch Kammerwände voneinander abgetrennt sind,
- Fig. 2: eine Detailansicht des Batteriegehäuses gemäß Fig. 1, wobei dargestellt ist, dass eine Kabeldurchführung eine Kammerwand durchgreift und zwei Kammern miteinander verbindet,
- Fig. 3: eine weitere Detailansicht des Batteriegehäuses gemäß Fig. 1 und Fig. 2, wobei dargestellt ist, dass unter der Kabeldurchführung eine Ausnehmung für eine weitere Kabeldurchführung vorgesehen ist,
- Fig. 4: eine Seitenansicht zweier übereinander angeordneter Kabeldurchführungen in einer Kammerwand oder einer Außenwand eines Batteriegehäuses,
- Fig. 5: ein weiteres Ausführungsbeispiel einer Kabeldurchführung, die in eine im Wesentlichen rechteckförmige und einseitig offene Aussparung einer Kammerwand mit einem Formkörper eingesetzt oder eingeschoben ist, wobei der Formkörper mit intumeszierendem Material imprägniert ist,
- Fig. 6: ein weiteres Ausführungsbeispiel einer Kabeldurchführung, die in einen Eckbereich einer Kammerwand oder Außenwand eingesetzt ist,
- Fig. 7: eine Explosionsdarstellung einer Kabeldurchführung mit mehreren Gehäuseteilen, die zu einem Gehäuse zusammenfügbar sind,
- Fig. 8: die Kabeldurchführung gemäß Fig. 7 in zusammengefügtem Zustand, die in einer Kammerwand oder Außenwand positionierbar ist, und
- Fig. 9: ein Ventil zum Druckausgleich und/ oder Drucküberlastabbau.

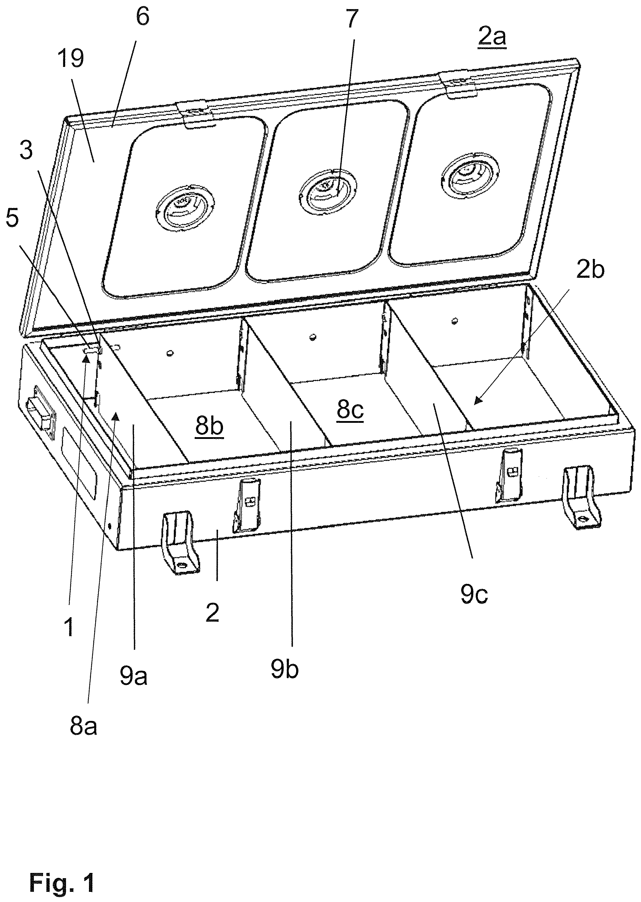

Fig. 1 zeigt eine Kabeldurchführung 1 eines Batteriegehäuses 2 oder für ein Batteriegehäuse 2, umfassend einen Dichtkörper 3, der einen Durchgang 4 für ein Kabel 5 oder eine Leitung aufweist.

Das Batteriegehäuse 2 weist einen Deckel 6 auf, in dem Ventile 7 zum Druckausgleich und/ oder Drucküberlastabbau angeordnet sind. Ein Ventil 7 zum Druckausgleich und/ oder Drucküberlastabbau kann Überdrücke im Inneren 2b des Batteriegehäuses 2 durch eine Fluidleitung in die Atmosphäre 2a oder über ein entsprechend angeschlossenes Leitungssystem abbauen und weist ein intumeszierendes Material auf, welches im Brandfall die Fluidleitung verschließt. Die dem Inneren 2b zugewandte Seite des Deckels 6 kann mit einer intumeszierenden Schicht versehen sein. So kann die Qualität des Brandschutzes noch verbessert werden.

Das Innere 2b des Batteriegehäuses 2 ist in Kammern 8a, 8b, 8c unterteilt, die durch Kammerwände 9a, 9b, 9c voneinander abgetrennt sind. In den Kammern 8a, 8b, 8c sind nicht gezeigte Batteriezellen angeordnet.

Fig. 1 zeigt mit Bezug zur Kammerwand 9a, dass der Dichtkörper 3 ein intumeszierendes Material aufweist oder aus einem solchen Material gefertigt ist.

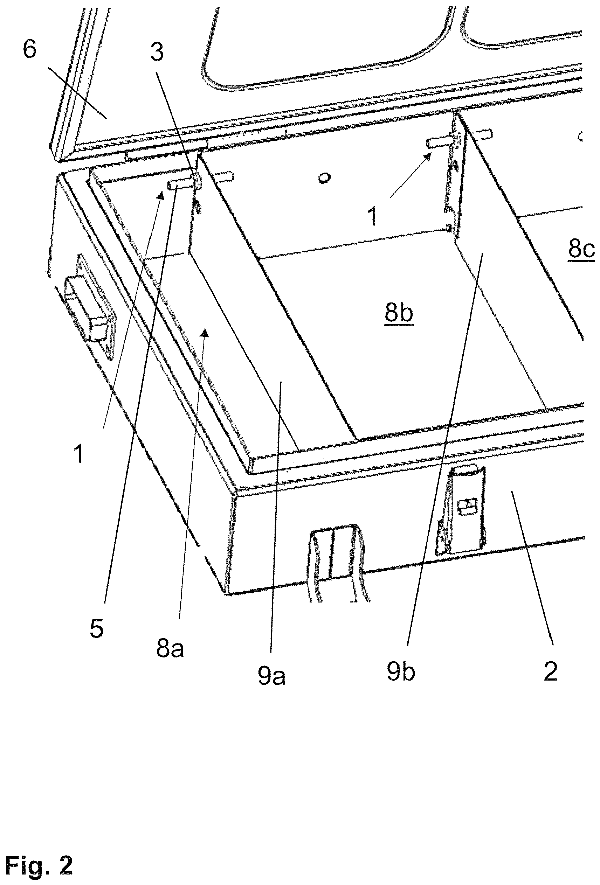

Fig. 2 zeigt das Batteriegehäuse 2 gemäß Fig. 1 im Detail und in vergrößerter Ansicht, wobei auch in der Kammerwand 9b eine Kabeldurchführung 1 angeordnet ist, die sich von der Kammer 8b in die Kammer 8c erstreckt.

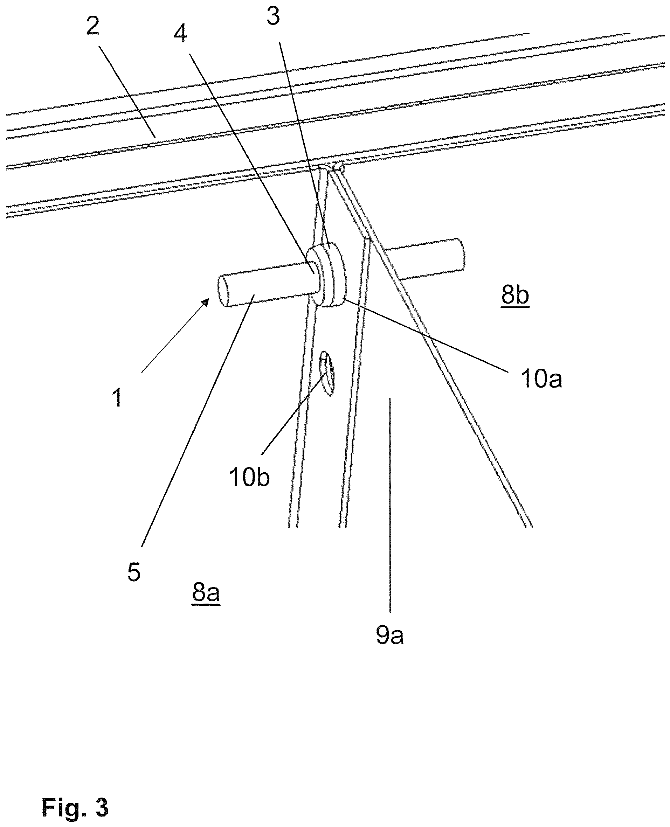

Fig. 3 zeigt das Batteriegehäuse 2 gemäß Fig. 1 und 2 im Detail und in weiter vergrößerter Ansicht, wobei dargestellt ist, dass unter der Kabeldurchführung 1 eine Ausnehmung 10b angeordnet ist, die eine weitere Kabeldurchführung 1 aufnehmen kann.

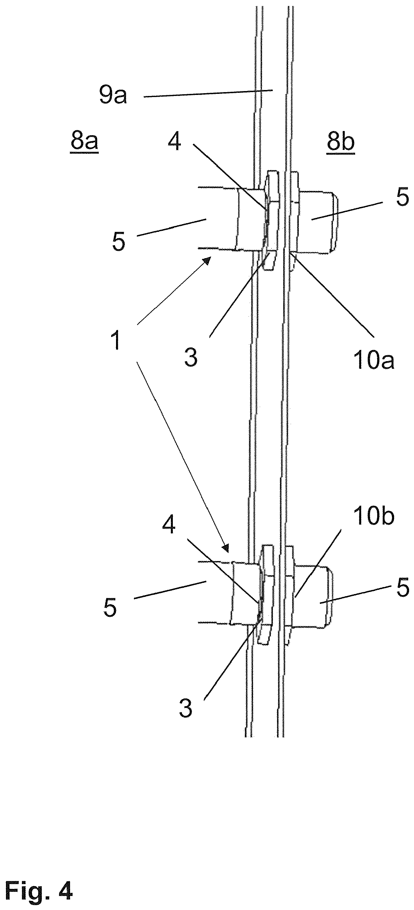

Fig. 4 zeigt, dass zwei Kabeldurchführungen 1 übereinander in der Kammerwand 9a angeordnet sind.

Eine Kabeldurchführung 1 kann auch eine Außenwand des Batteriegehäuses 2 durchgreifen.

Fig. 1 bis 4 zeigen insoweit ein Batteriegehäuse 2, umfassend eine Kabeldurchführung 1. Der Dichtkörper 3 ist als Formteil in einer Kammerwand 9a des Batteriegehäuses 2 angeordnet, wobei sich ein Kabel 5 oder eine Leitung sowohl durch den Dichtkörper 3 als auch durch die Kammerwand 9a von einer ersten Kammer 8a kommend in eine zweite Kammer 8b erstreckt.

Der Dichtkörper 3 ist in eine Ausnehmung 10a, 10b der Kammerwand 9a eingesteckt.

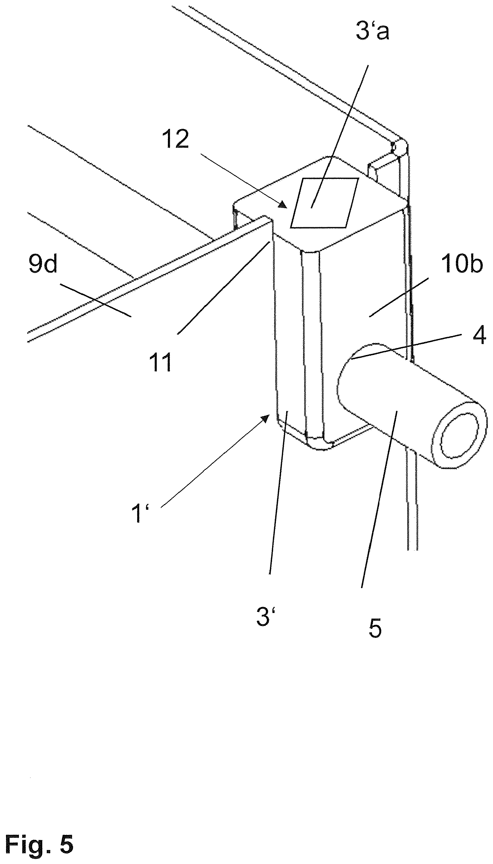

Fig. 5 zeigt anhand einer weiteren Kabeldurchführung 1', dass der Dichtkörper 3' als Block mit mindestens einer Nut 11 zur Aufnahme einer Kammerwand 9d ausgebildet ist. Der Dichtkörper 3' ist in die rechteckförmige und einseitig offene Aussparung 12 der Kammerwand 9d eingeschoben.

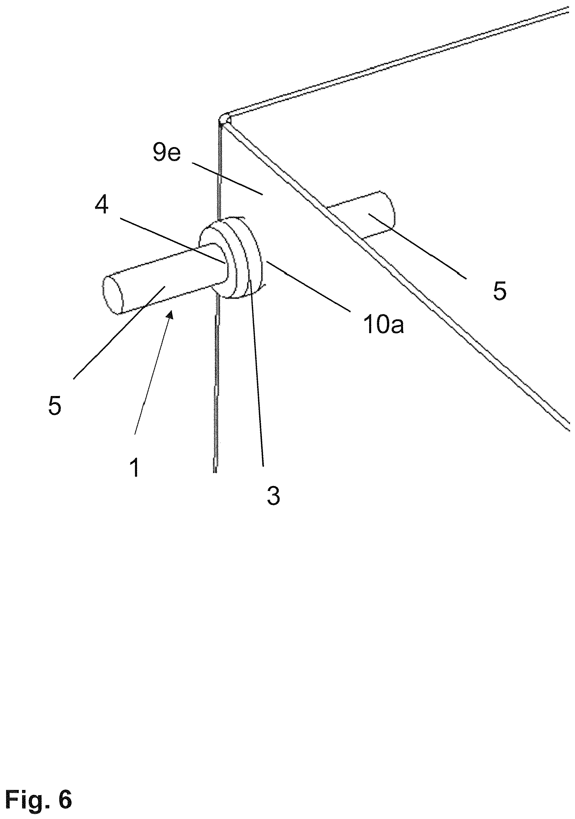

Fig. 6 zeigt anhand der Kabeldurchführung 1, dass der Dichtkörper 3 in eine kreisförmige Ausnehmung 10a einer Kammerwand 9e eingesteckt ist.

Der in den Fig. 1 bis 6 dargestellte Dichtkörper 3, 3' ist als Formteil ausgebildet, welches eine Trägerstruktur mit Maschen oder Poren aufweist, wobei das intumeszierende Material in die Trägerstruktur eingebettet ist.

Die Trägerstruktur ist aus einem Metall oder einem hochtemperaturbeständigen Material gefertigt. Die Trägerstruktur 3'a ist anhand von Fig. 5 schematisch dargestellt. Ein Drahtgewirke ist mit dem intumeszierenden Material getränkt.

Die Fig. 1 bis 6 zeigen, dass der Dichtkörper 3, 3' unmittelbar an der Kammerwand 9a, 9d, 9e des Batteriegehäuses 2 anliegt.

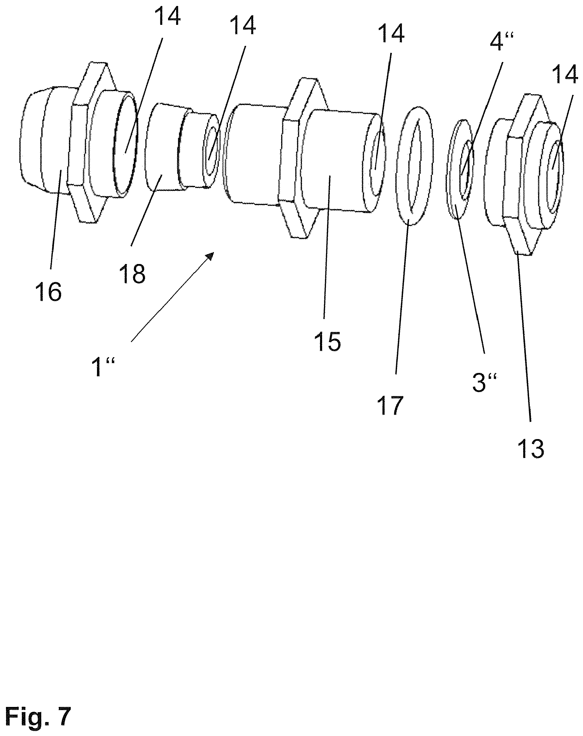

Fig. 7 zeigt anhand einer Explosionsdarstellung eine weitere Kabeldurchführung 1", bei welcher der Dichtkörper 3" in einem Gehäuseteil 13 aufgenommen ist, welches einen weiteren Durchgang 14 für ein Kabel 5 oder eine Leitung aufweist. Der Dichtkörper 3" ist von dem Gehäuseteil 13 umgeben und durch dieses an ein Gehäusegegenteil 15 anlegbar.

Das Gehäuseteil 13 ist mit dem Gehäusegegenteil 15 an einem axialen Ende verschraubbar. Das Gehäusegegenteil 15 ist mit einem weiteren Gehäuseteil 16 am anderen axialen Ende des Gehäusegegenteils 15 verschraubbar, wobei das weitere Gehäuseteil 16 dem Gehäuseteil 13 axial gegenüberliegt.

Das Gehäusegegenteil 15 trägt eine Dichtung 17 und nimmt einen Klemmkörper 18 auf, der von dem weiteren Gehäuseteil 16 in das Gehäusegegenteil 15 einpressbar ist. Die Dichtung 17 kann als IP-Dichtung fungieren.

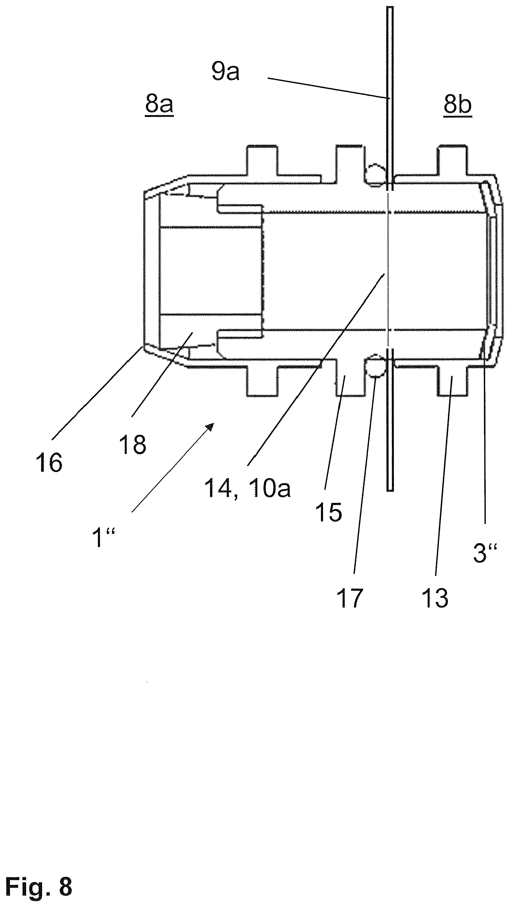

Fig. 8 zeigt ein Batteriegehäuse 2, wobei der Dichtkörper 3" in einem Gehäuseteil 13 aufgenommen ist und zwischen diesem und einem Gehäusegegenteil 15 aufgenommen ist, wobei das Gehäusegegenteil 15 eine Kammerwand 9a oder Außenwand des Batteriegehäuses 2 durchgreift und wobei dem Gehäuseteil 13 ein weiteres Gehäuseteil 16 axial auf einer anderen Seite der Kammerwand 9a oder Außenwand gegenüberliegt und mit dem Gehäusegegenteil 15 verbunden ist.

Eine Dichtung 17 liegt auf dem Gehäusegegenteil 15 auf und umfängt dieses, wobei das weitere Gehäuseteil 16 einen Klemmkörper 18 in das Gehäusegegenteil 15 eindrückt.

Der Dichtkörper 3" ist zur Abdichtung von innen nach außen vorgesehen, wobei von außen nach innen eine IP-Dichtung, nämlich die Dichtung 17, vorgesehen ist.

Der in den Fig. 7 und 8 dargestellte Dichtkörper 3" ist als Formteil ausgebildet, welches eine Trägerstruktur mit Maschen oder Poren aufweist, wobei das intumeszierende Material in die Trägerstruktur eingebettet ist.

Die Trägerstruktur ist aus einem Metall oder einem hochtemperaturbeständigen Material gefertigt.

Fig. 1 zeigt, dass die dem Inneren 2b zugewandte Seite des Deckels 6 mit einer Schicht 19 versehen ist, die intumeszierendes Material aufweist oder aus einem solchen Material gefertigt ist. So kann die Qualität des Brandschutzes noch verbessert werden.

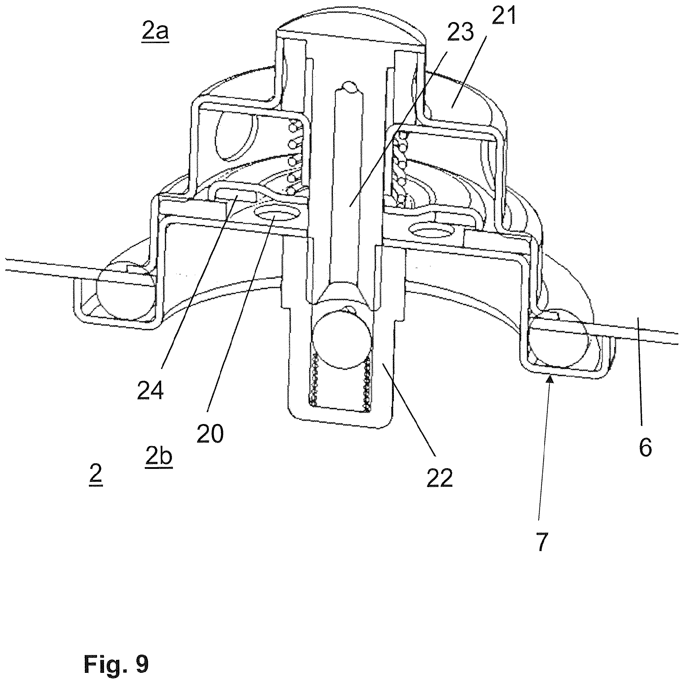

Fig. 1 und 9 zeigen, dass das Batteriegehäuse 2 einen Deckel 6 aufweist, in dem mindestens ein Ventil 7 zum Druckausgleich und/ oder Drucküberlastabbau angeordnet ist.

Das Ventil 7 zum Druckausgleich und/ oder Drucküberlastabbau kann Überdrücke im Inneren 2b des Batteriegehäuses 2 durch eine Fluidleitung 20 in die Atmosphäre 2a abbauen und weist eine gegen eine Federkraft abhebbare Dichtung 24 aus intumeszierendem Material auf, welches im Brandfall die Fluidleitung 20 verschließt.

Fig. 9 zeigt konkret ein Ventil 7 zum Druckausgleich und/ oder Drucküberlastabbau für das Batteriegehäuse 2, umfassend ein Gehäuse mit einem der Atmosphäre 2a zugewendeten ersten Abschnitt 21 und einem dem Inneren 2b des Batteriegehäuses 2 zugewendeten zweiten Abschnitt 22, wobei die beiden Abschnitte 21, 22 absperrbar fluidleitend miteinander verbunden sind.

Es ist mindestens ein Teilventil vorgesehen, welches thermisch aktivierbar ist, um eine druckabbauende Fluidleitung 20 zwischen dem ersten Abschnitt 21 und dem zweiten Abschnitt 22 im Brandfall abzusperren.

Konkret ist ein erstes Teilventil vorgesehen, welches thermisch aktivierbar ist, um eine erste, druckausgleichende Fluidleitung 23 zwischen dem ersten Abschnitt 21 und dem zweiten Abschnitt 22 abzusperren.

Konkret ist des Weiteren ein zweites Teilventil vorgesehen, welches thermisch aktivierbar ist, um eine zweite, druckabbauende Fluidleitung 20 zwischen dem ersten Abschnitt 21 und dem zweiten Abschnitt 22 abzusperren.

Die erste Fluidleitung 23 ist im Normalbetrieb permanent zum Druckausgleich zwischen Atmosphäre 2a und dem Inneren 2b des Batteriegehäuses 2 geöffnet und nur durch thermische Beaufschlagung verschließbar. Die zweite Fluidleitung 20 wird im Brandfall verschlossen und ist im Normalfall durch Freigeben eines Dichtsitzes zum Abbau höherer Drücke freigebbar.

### Bezugszeichenliste

- 1, 1', 1": Kabeldurchführung
- 2: Batteriegehäuse
- 2a: Atmosphäre
- 2b: Inneres von 2
- 3, 3', 3": Dichtkörper von 1, 1', 1"
- 4: Durchgang von 3
- 5: Kabel
- 6: Deckel von 2
- 7: Ventil (Druckausgleich, Drucküberlastabbau)
- 8a, b, c: Kammer von 2
- 9a, b, c, d, e: Kammerwand von 2
- 10a, b: Ausnehmung von 9a
- 11: Nut von 3'
- 12: Aussparung von 9d
- 13: Gehäuseteil von 1"
- 14: weiterer Durchgang von 13
- 15: Gehäusegegenteil
- 16: weiteres Gehäuseteil
- 17: Dichtung oder IP-Dichtung
- 18: Klemmkörper
- 19: Schicht
- 20: zweite Fluidleitung von 7
- 21: erster Abschnitt von 7
- 22: zweiter Abschnitt von 7
- 23: erste Fluidleitung von 7
- 24: Dichtung von 7

## Patentansprüche

1. Kabeldurchführung (1, 1', 1") eines Batteriegehäuses (2) oder für ein Batteriegehäuse (2), umfassend einen Dichtkörper (3, 3', 3"), der einen Durchgang (4) für ein Kabel (5) oder eine Leitung aufweist,
**dadurch gekennzeichnet, dass**
der Dichtkörper (3, 3', 3") ein intumeszierendes Material aufweist oder aus einem solchen Material gefertigt ist.

2. Kabeldurchführung nach Anspruch 1, **dadurch gekennzeichnet, dass** der Dichtkörper (3, 3', 3") als Formteil ausgebildet ist, welches eine Trägerstruktur (3'a) mit Maschen oder Poren aufweist, wobei das intumeszierende Material in die Trägerstruktur (3'a) eingebettet ist.

3. Kabeldurchführung nach Anspruch 2, **dadurch gekennzeichnet, dass** die Trägerstruktur (3'a) aus einem Metall oder einem hochtemperaturbeständigen Material gefertigt ist.

4. Kabeldurchführung nach einem der voranstehenden Ansprüche, **dadurch gekennzeichnet, dass** der Dichtkörper (3') als Block oder als Block mit mindestens einer Nut (11) zur Aufnahme einer Kammerwand (9d) oder Außenwand ausgebildet ist.

5. Kabeldurchführung nach einem der voranstehenden Ansprüche, **dadurch gekennzeichnet, dass** der Dichtkörper (3") in einem Gehäuse oder Gehäuseteil (13) aufgenommen ist, welches einen weiteren Durchgang (14) für ein Kabel (5) oder eine Leitung aufweist.

6. Kabeldurchführung nach Anspruch 5, **dadurch gekennzeichnet, dass** der Dichtkörper (3") von dem Gehäuseteil (13) umgeben und durch dieses an ein Gehäusegegenteil (15) anlegbar ist.

7. Kabeldurchführung nach Anspruch 6, **dadurch gekennzeichnet, dass** das Gehäuseteil (13) mit dem Gehäusegegenteil (15) verbindbar oder verschraubbar ist.

8. Kabeldurchführung nach Anspruch 6 oder 7, **dadurch gekennzeichnet, dass** das Gehäusegegenteil (15) mit einem weiteren Gehäuseteil (16) verbindbar und/ oder verschraubbar ist, welches dem Gehäuseteil (13) axial gegenüberliegt.

9. Kabeldurchführung nach einem der Ansprüche 6 bis 8, **dadurch gekennzeichnet, dass** das Gehäusegegenteil (15) eine Dichtung (17) trägt und/ oder einen Klemmkörper (18) aufnimmt, der von einem weiteren Gehäuseteil (16) in das Gehäusegegenteil (15) einpressbar ist.

10. Kabeldurchführung nach einem der voranstehenden Ansprüche, **dadurch gekennzeichnet, dass** der Dichtkörper (3") zur Abdichtung von innen nach außen vorgesehen ist, wobei von außen nach innen eine IP-Dichtung (17) vorgesehen ist.

11. Batteriegehäuse (2), umfassend eine Kabeldurchführung (1, 1', 1") nach einem der voranstehenden Ansprüche.

12. Batteriegehäuse nach Anspruch 11, **dadurch gekennzeichnet, dass** der Dichtkörper (3, 3') als Formteil in einer Kammerwand (9a-e) und/ oder einer Außenwand des Batteriegehäuses (2) angeordnet ist, wobei sich ein Kabel (5) oder eine Leitung sowohl durch den Dichtkörper (3, 3') als auch durch die Außenwand und/ oder die Kammerwand (9a-e) von einer ersten Kammer (8a) kommend in eine zweite Kammer (8b) erstreckt.

13. Batteriegehäuse nach Anspruch 11 oder 12, **dadurch gekennzeichnet, dass** der Dichtkörper (3, 3') in eine Aussparung (12) der Kammerwand (9d) oder Außenwand eingeschoben oder in eine Ausnehmung (10a, 10b) der Kammerwand (9a) oder Außenwand eingesteckt ist und/ oder dass der Dichtkörper (3, 3') unmittelbar an der Kammerwand (9a-e) oder Außenwand des Batteriegehäuses (2) anliegt.

14. Batteriegehäuse nach Anspruch 11, **dadurch gekennzeichnet, dass** der Dichtkörper (3") in einem Gehäuseteil (13) aufgenommen ist und zwischen diesem und einem Gehäusegegenteil (15) aufgenommen ist, wobei das Gehäusegegenteil (15) eine Kammerwand (9a) oder Außenwand des Batteriegehäuses (2) durchgreift und wobei dem Gehäuseteil (13) ein weiteres Gehäuseteil (16) axial auf einer anderen Seite der Kammerwand (9a) oder Außenwand gegenüberliegt und mit dem Gehäusegegenteil (15) verbunden ist.

15. Batteriegehäuse nach Anspruch 14, **dadurch gekennzeichnet, dass** eine Dichtung (17) auf dem Gehäusegegenteil (15) aufliegt und dieses umfängt, wobei das weitere Gehäuseteil (16) einen Klemmkörper (18) in das Gehäusegegenteil (15) eindrückt.
